# EUROPEAN PATENT SPECIFICATION

(11) **EP 3 967 999 B1**
(45) Date of publication and mention of the grant of the patent: **11.03.2026**
(21) Application number: 20382803.3
(22) Date of filing: 14.09.2020
(51) Int. Cl.: G01M 3/28, G01M 3/32, A62C 35/68, A62C 99/00, A62C 37/50

(54) **SYSTEM FOR ANALYSIS OF ROOM AIR INTEGRITY**
SYSTEM ZUR ANALYSE EINER LUFTINTEGRITÄT EINES RAUMS
SYSTÈME D'ANALYSE DE L'INTÉGRITÉ DE L'AIR D'UNE PIÈCE

(43) Date of publication of application: 16.03.2022
(73) Proprietor: Tyco Fire Products LP, Cranston, Rhode Island 02910 (US)
(72) Inventor: Ramirez, Adrián, 08740 Sant Andreu de la Barca (ES); Boyano Lago, Borja, 08740 Barcelona (ES)
(74) Representative: Clarke, Modet y Cía., S.L.

(56) References cited:
- US-A- 5 128 881
- US-A1- 2013 047 706
- US-A1- 2015 323 411

## Description

### BACKGROUND

Fire suppression systems are commonly used to protect an area and objects within the area from fire. Fire suppression systems can be activated manually or automatically in response to an indication that a fire is present nearby (e.g., an increase in ambient temperature beyond a predetermined threshold value, etc.). Once activated, fire suppression systems spread a fire suppressant agent throughout the area. The fire suppressant agent then extinguishes or controls the fire.

Some fire suppression systems utilize a pipe network to distribute a gaseous fire suppressant agent throughout an enclosed space. If the concentration of the agent within the space is sufficiently high, the agent suppresses fires within the space. However, if the integrity of the enclosed space is not sufficient, the agent can leak out of the space without reaching the required threshold concentration for a sufficient period of time to fully extinguish the fires. Additionally, if leaks occur in the pipe network, the agent may not be distributed throughout the space as intended, and the efficacy of the fire suppression system may be reduced. Patent document US5128881-A discloses a fire suppression system that uses blower doors. Patent documents US2013047706-A1 and US2015323411-A1 respectively refer to a system for measuring a leakage area for constructing a smoke-ventilation apparatus and a device for determining and/or monitoring the air tightness of an enclosed room.

### SUMMARY

At least one embodiment relates to a fire suppression system including a container of fire suppressant agent, a pipe network fluidly coupling the container to a plurality of nozzles, a pressure sensor positioned to measure a pressure within a room containing the nozzles, a test fluid supply fluidly coupled to the pipe network and configured to supply a test fluid to the room through the nozzles, and a controller operatively coupled to the test fluid supply and the pressure sensor. The controller is configured to: control the test fluid supply to supply the test fluid to the room at the first flow rate; control the pressure sensor to measure a first pressure within the room while the test fluid is supplied to the room at the first flow rate; and estimate an agent hold time and an achieved concentration that can be provided by the fire suppression system within the room based on the first flow rate and the first pressure.

Another embodiment, which is not covered by the claimed invention, relates to a method of identifying leaks within a pipe network of a fire suppression system. The method includes receiving model data describing the pipe network; generating, based on the model data, a predicted pressure drop model including predicted pressures at a plurality of locations throughout the pipe network for a predetermined flow rate of test fluid through the pipe network; measuring pressures at a plurality of locations throughout the pipe network while supplying the test fluid to the pipe network at the predetermined flow rate; generating a measured pressure drop model based on the measured pressures; comparing the predicted pressure drop model and the measured pressure drop model to predict if a leak is present in the pipe network; and in response to a prediction that the leak is present, identifying a location of the leak based on the predicted pressure drop model and the measured pressure drop model.

This summary is illustrative only and is not intended to be in any way limiting.

### BRIEF DESCRIPTION OF THE DRAWINGS

FIG. 1 is a side view of a room containing a fire suppression system, according to an exemplary embodiment.
FIG. 2 is a top view of the room and the fire suppression system of FIG. 1.
FIG. 3 is a block diagram of a testing system for a room and a fire suppression system, according to an exemplary embodiment.
FIG. 4 is another block diagram of the testing system of FIG. 3.
FIG. 5 is a block diagram of a method of performing a pipe leakage test, which is not covered by the claimed invention.
FIG. 6 is a block diagram of a method of performing a room air integrity test, which is not covered by the claimed invention.

### DETAILED DESCRIPTION

Before turning to the figures, which illustrate the exemplary embodiments in detail, it should be understood that the present disclosure is not limited to the details or methodology set forth in the description or illustrated in the figures. It should also be understood that the terminology used herein is for the purpose of description only and should not be regarded as limiting.

### Overview

Referring generally to the Figures, a testing system performs various tests to evaluate leakage of a fire suppression system and a room associated with the fire suppression system. The fire suppression system includes a pipe network that distributes fire suppressant agent to a series of nozzles. The testing system includes a compressed air supply that introduces compressed air into the pipe network. A valve such as an electrical regulation valve controls the flow rate of the compressed air through the pipe network. A series of pipe pressure sensors are arranged at various locations throughout the pipe network. A series of room pressure sensors are arranged at various locations throughout the room. A controller such as a cloud controller receives data from these pressure sensors and controls the compressed air supply and the electrical regulation valve to perform the tests.

To perform a pipe leakage test, the cloud controller receives model data describing various dimensional and/or performance characteristics of the fire suppression system. Based on this model data, the cloud controller generates a predicted pressure drop model that describes the pressure drop along the length of the pipe network when the compressed air supply supplies air to the pipe network at one or more flow rates. The cloud controller then controls the compressed air supply to provide compressed air at the one or more flow rates while the pipe pressure sensors measure the pressure at various locations along the pipe network. The cloud controller compares the measured pressures to the predicted pressure drop model to identify any discrepancies between the predicted and measured pressures at each location. If the measured pressure is substantially lower than the predicted pressure at any location, the cloud controller determines that a leak is present in the pipe network. The cloud controller then identifies a general location of the leak based on the location where the discrepancy between the predicted pressure and the measured pressure occurred.

To perform a room air integrity test, the cloud controller receives model data describing various characteristics of the room and the fire suppression system. Using the model data, the cloud controller generates an air integrity model that relates measured pressures and corresponding air flow rates to an agent hold time and an achieved concentration. The cloud controller controls the compressed air supply and the electrical regulation valve to provide compressed air to the pipe network at constant flow rate. As the air escapes the pipe network through the nozzles, the pressure in the room builds. The cloud controller uses the room pressure sensors to measure the pressure at various locations in the room over time. The cloud controller repeats this process for different flow rates. The cloud controller uses the air integrity model and the measured pressures to determine an estimated agent hold time and an estimated achieved concentration.

### Fire Suppression System

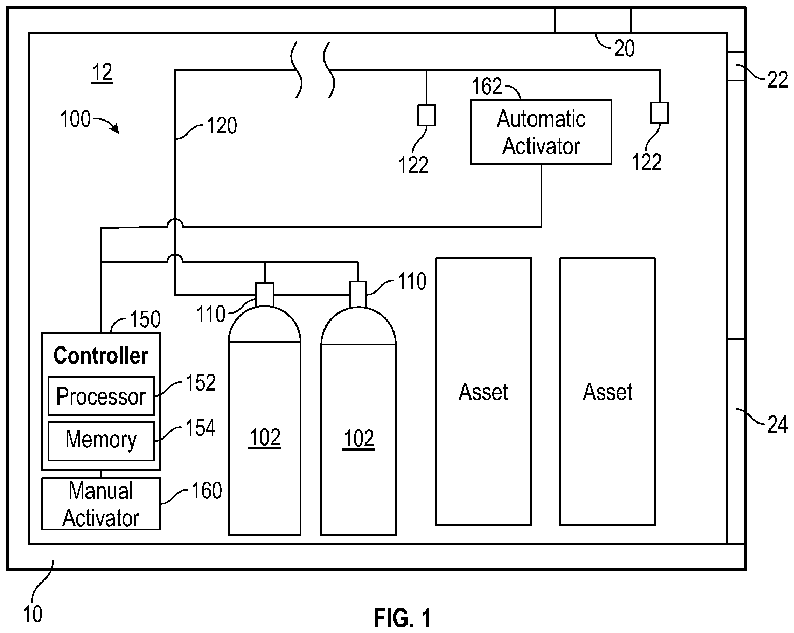

Referring to FIG. 1, a room, building, or enclosure, shown as room 10, is outfitted with a fire suppression system 100, according to an exemplary embodiment. In one embodiment, the fire suppression system 100 is a chemical fire suppression system. The fire suppression system 100 is configured to dispense or distribute a fire suppressant agent onto and/or around a fire within the room 10, controlling or suppressing the fire. The fire suppression system 100 can be used alone or in combination with other types of fire suppression systems (e.g., a building sprinkler system, a portable fire extinguisher, etc.). In some embodiments, multiple fire suppression systems 100 are used in combination with one another to cover a larger area (e.g., each in different rooms of a building, multiple rooms 10, etc.).

In the embodiment shown in FIG. 1, the room 10 includes a series of walls (e.g., a floor, a ceiling, side walls, etc.), that enclose a space or volume, shown as enclosed volume 12. The room 10 has a series of apertures, openings, or airflow paths, though which gas (e.g., air, fire suppressant agent, etc.) can exit and/or enter the enclosed volume 12. As shown, the room 10 includes a first airflow path, shown as HVAC vent 20, in fluid communication with a heating, ventilation, and air conditioning (HVAC) system. The HVAC vent 20 may facilitate introduction of cooled or heated air from an HVAC system into the enclosed volume 12. The room 10 further includes a second airflow path, shown as leakage aperture 22. The leakage aperture 22 fluidly couples the enclosed volume 12 with a space outside of the room 10 (e.g., the atmosphere). By way of example, the leakage aperture 22 may be hole formed during construction (e.g., a gap between two panels, a screw hole, etc.) that passively permits fluid communication. The room 10 further includes a third airflow path, shown as door 24. The door 24 may be selectively opened or closed.

In some embodiments, the fire suppression system 100 is a clean agent system that is configured to suppress fires within the room 10 while limiting damage to nearby assets. The fire suppression system 100 may utilize a clean agent, such as a halocarbon agent (e.g., 3M Novec 1230, FM 200, etc.). Such clean agents may be stored as a liquid and configured to vaporize upon discharge, absorbing heat from the fire to suppress or control the fire. After absorbing heat, the agent may evaporate without leaving a residue that requires cleanup. The agent may also be electrically non-conductive. These properties make clean agents useful in certain applications where delicate and/or valuable items or information are stored. By way of example, the fire suppression system 100 may be used to protect telecommunication sites, data centers, archives, museums, oil and gas facilities, power plants, or other areas. In other embodiments, the fire suppression system 100 utilizes other types of agents.

Referring again to FIG. 1, the fire suppression system 100 includes a pair of fire suppressant tanks 102 (e.g., vessels, containers, vats, drums, tanks, canisters, cartridges, or cans, etc.). The fire suppressant tanks 102 each contain a pressurized fire suppressant agent. Each fire suppressant tank 102 is coupled to a valve, puncture device, or activator assembly, shown as actuator 110. The actuators 110 are configured to selectively fluidly couple an internal volume of each fire suppressant tank 102 to a conduit (e.g., a hose, a pipe, a tube, etc.), shown as pipe network 120. The pipe network 120 may be an assembly including one or more straight or bent sections of conduit and/or one or more fittings. The pipe network 120 conveys the agent to one or more outlets, shown as nozzles 122. The nozzles 122 generate a spray of agent (e.g., vaporized agent) that addresses one or more fires affecting one or more assets (e.g., walls, spaces, furniture, vehicles, servers, museum pieces, etc.). The nozzles 122 may direct the agent directly toward the assets and/or the nozzles 122 may direct the agent around the assets (e.g., to surround the assets).

As shown in FIG. 1, the actuators 110 are operatively coupled to a controller 150. In response to an indication that a fire has been detected, the controller 150 is configured to activate the actuators 110, releasing the pressurized agent into the pipe network 120. The controller 150 includes a processing circuit containing a processor 152 in communication with a memory device or memory 154.

The controller 150 is operatively coupled to one or more first activators, sensors, or user interfaces, shown as manual activator 160. The manual activator 160 may include a pull station, lever, button, knob, switch, touch screen, or any other type of user interface device that facilitates interaction by a user. The manual activator 160 may be marked to indicate that a user should interact with the manual activator 160 (e.g., push a button, pull a pull station, etc.) in the event of a fire. In response to such an interaction, the manual activator 160 sends a fire detection signal to the controller 150 indicating that a fire has been detected within the room 10.

The controller 150 is operatively coupled to one or more second activators, sensors, or fire detection devices, shown as automatic activator 162. The automatic activator 162 may include temperature or heat sensors (e.g., thermocouples, linear detection wire, etc.), smoke detectors, optical sensors (e.g., cameras, infrared sensors, etc.), or other types of sensors configured to detect the presence of a fire or a sign of a fire within the room 10. In response to detecting a fire within the space, the automatic activator 162 sends a fire detection signal to the controller 150.

In response to receiving a detection signal, the controller 150 is configured to send an activation signal to the actuators 110. In some embodiments, the activation signal is an electrical signal. In other embodiments, the activation signal is or causes a flow of pressurized fluid or a movement of a mechanical member (e.g., a cable, a lever, etc.). The controller 150 may send the activation signal to all of the actuators 110. Alternatively, activation of one actuator 110 by the controller 150 may automatically trigger activation of the other actuators 110. In response to receiving the activation signal, the actuators 110 activate, fluidly coupling the corresponding fire suppressant tank 102 to the pipe network 120. The pressurized fire suppressant agent is then forced through the pipe network 120 to the nozzles 122, where the agent is distributed about the assets A to suppress the detected fires. The fire suppression system 100 may supply fire suppressant agent through all of the nozzles 122 simultaneously. Alternatively, the fire suppression system 100 may supply fire suppressant agent through only a certain subset of the nozzles 122.

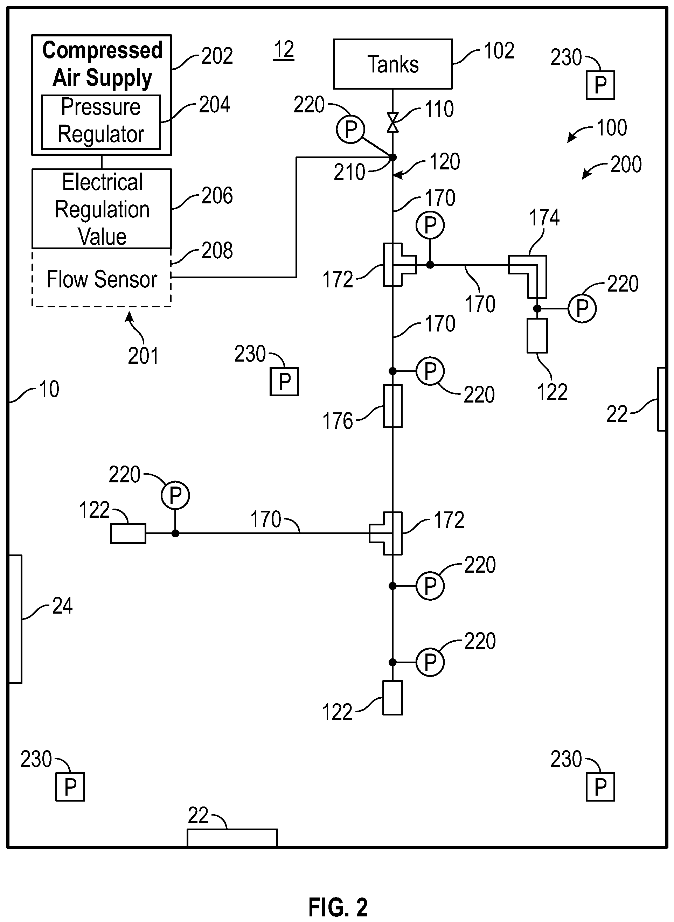

Referring to FIG. 2, the pipe network 120 includes a series of conduits, pipes, or tubes, shown as pipe sections 170, coupled (e.g., fluidly coupled) to one another by a series of fittings or couplers. Specifically, as shown in FIG. 2, the pipe network 120 includes a pair of tee fittings 172, an elbow fitting 174, and a straight fitting 176. The fittings may facilitate the use of multiple branching paths within the pipe network 120 to distribute agent to multiple areas of the room 10. As shown, the pipe network 120 fluidly couples three nozzles 122 to the fire suppressant tanks 102. Although one configuration of the pipe network 120 is shown, it should be understood that other arrangements of the pipe network 120 are contemplated. By way of example, the pipe network 120 may include more, fewer, or different pipe sections 170 and/or fittings. By way of example, the pipe network 120 may couple more or fewer nozzles 122 to the fire suppressant tanks 102.

### Testing System

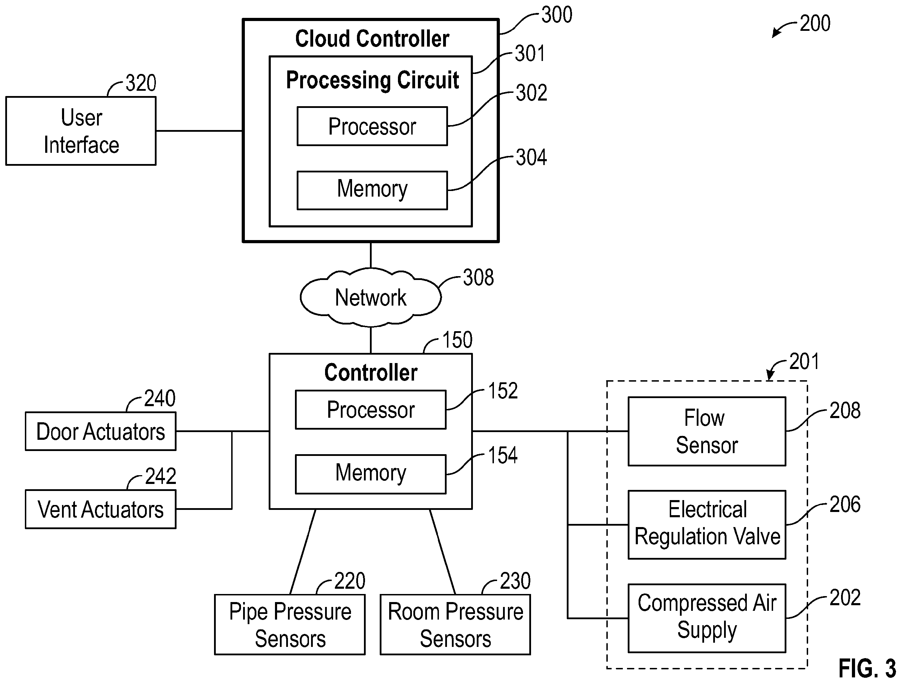

Referring to FIGS. 2 and 3, a commission test system, room air integrity test system, or pipe leakage test system, is shown as testing system 200 according to an exemplary embodiment. The testing system 200 includes testing hardware or a test fluid delivery assembly (e.g., a test gas delivery assembly, a test liquid delivery assembly, etc.), shown as test gas assembly 201. The test gas assembly 201 is configured to supply a pressurized fluid (e.g., a compressed gas, a pressurized liquid, etc.) to the pipe network 120 to facilitate various testes of the pipe network 120 and the room 10 as described herein. In some embodiments, the test gas assembly 201 is configured to supply a compressed gas (e.g., air, nitrogen, an inert gas such as argon, etc.) to the pipe network 120. In other embodiments, the test gas assembly 201 is configured to supply a liquid (e.g., a fluid that is a liquid when under pressure within the pipe network 120 but which changes to a gas when released into the room 10).

The test gas assembly 201 includes a fluid supply (e.g., a gas supply, a liquid supply, etc.), shown as compressed air supply 202. In the embodiment of FIG. 2, the compressed air supply 202 is configured to provide a flow of compressed air. By way of example, the compressed air supply 202 may include a compressor that compresses air to an increased pressure (e.g., air retrieved from the enclosed volume 12, air retrieved from outside of the enclosed volume 12). In such an embodiment, the amount of air that is able to be supplied by the compressed air supply 202 may be infinite. By way of another example, the compressed air supply 202 may include a tank or other container of compressed air (e.g., at a pressure higher than the intended supply pressure to the pipe network 120). In other embodiments, the compressed air supply 202 is replaced with a different fluid supply that is configured to supply a different type of test fluid (e.g., nitrogen, argon, etc.).

The compressed air supply 202 includes a pressure regulator 204 that is configured to control (e.g., regulate) an output pressure of the air supplied by the compressed air supply 202. The pressure regulator 204 may regulate the output pressure to a constant target pressure. The target pressure may be predetermined and fixed. In other embodiments, the target pressure may be adjustable (e.g., manually, by the cloud controller 300, etc.). By way of example, the pressure regulator 204 may include a mechanical pressure regulator or an electronically controlled pressure regulator. By way of another example, the pressure regulator 204 may include a controller of the compressed air supply 202 and/or a pressure sensor that controls operation of the compressed air supply 202 (e.g., an on/off state of the compressor).

The output of the compressed air supply 202 is fluidly coupled to a flow control valve, flow regulator, or electronic valve, shown as electrical regulation valve 206. The electrical regulation valve 206 is configured to control a flow rate of the compressed air from the compressed air supply 202 to the pipe network 120. The electrical regulation valve 206 may be electrically controlled (e.g., by the cloud controller 300) to vary the flow rate (e.g., setting the flow rate to a target flow rate). In some embodiments, the electrical regulation valve 206 operates using open loop control. In other embodiments, the electrical regulation valve 206 is operatively coupled (e.g., directly, indirectly through the controller 150 and/or the cloud controller 300) to a flow rate sensor, shown as flow sensor 208, that is configured to measure the flow through the electrical regulation valve 206. The electrical regulation valve 206 may utilize feedback from the flow sensor 208 to perform closed loop control of the flow rate.

The test gas assembly 201 is fluidly coupled to the pipe network 120 at a point, shown as test gas inlet 210. The test gas inlet 210 may be positioned adjacent (e.g., near, at the same location as) the connection of the fire suppressant tanks 102 and the actuators 110 to the pipe network 120. Accordingly, compressed air from the test gas assembly 201 and agent from the fire suppressant tanks 102 may follow a similar path throughout the pipe network 120.

In other embodiments not forming part of the claimed invention, the test gas assembly 201 introduces air into the room 10 though another inlet. By way of example, the test gas assembly 201 may be fluidly coupled to an HVAC system such that the test gas assembly 201 introduces air into the room 10 through one or more HVAC vents 20. By way of another example, the test gas assembly 201 may introduce air into the room 10 though a dedicated aperture.

In embodiments where the test gas assembly 201 introduces air into the room 10, the test gas assembly 201 produces a positive pressure in the room 10. In other embodiments, the test gas assembly 201 removes air from the room 10 such that the test gas assembly produces a negative pressure (i.e., a vacuum) in the room 10. By way of example, the compressed air supply 202 may remove air from the room 10 and deposit the air outside of the room 10.

The testing system 200 further includes a series of pressure sensors, shown as pipe pressure sensors 220. The pipe pressure sensors 220 are each configured to measure a pressure at a location (e.g., a point or node) along the pipe network 120. In some embodiments, the pipe pressure sensors 220 are configured to measure a relative pressure (e.g., gauge pressure, pressure relative to the pressure at the test gas inlet 210). In some embodiments, the pipe pressure sensors 220 are relative pressure transducers. The pipe pressure sensors 220 are spread throughout the pipe network 120. As shown, a first pipe pressure sensor 220 measures the pressure at the test gas inlet 210. The testing system 200 may be configured to compare the pressures measured by the other pipe pressure sensors 220 to the measured pressure at the test gas inlet 210 to determine a relative pressure at each node along the pipe network 120. A second pipe pressure sensor 220 is positioned near each nozzle 122 (i.e., at an outlet of the pipe network 120). A series of third pipe pressure sensors 220 are spread throughout the pipe network 120 between the first and second pipe pressure sensors 220 (i.e., at a midpoint of the pipe network 120). In other embodiments, the testing system 200 includes more or fewer pipe pressure sensors 220 and/or pipe pressure sensors 220 at different locations throughout the pipe network 120.

The testing system 200 further includes a series of pressure sensors, shown as room pressure sensors 230. The room pressure sensors 230 are each configured to measure a pressure at a location (e.g., a point or node) within the enclosed volume 12. In some embodiments, the room pressure sensors 230 are configured to measure an absolute pressure. In some embodiments, the room pressure sensors 230 are absolute pressure transducers. In some embodiments, the room pressure sensors 230 are coupled to a ceiling or a side wall of the room 10. The room pressure sensors 230 are spread throughout the enclosed volume 12 (e.g., at different lateral locations, at different longitudinal locations, at different vertical locations). The room pressure sensors 230 may be permanently installed such that they remain within the room 10 even after testing is completed to facilitate repeated testing on a regular basis. In some embodiments, the room pressure sensors 230 are positioned so as to be visually unobtrusive when not in use (e.g., positioned near a ceiling or in a hidden location that obscures a line of sight from an observer within the room 10). In other embodiments, the testing system 200 includes more or fewer room pressure sensors 230 and/or room pressure sensors 230 at different locations throughout the room 10.

In some embodiments, the testing system 200 includes one or more actuators, shown as door actuators 240 and vent actuators 242. The door actuators 240 may be configured to selectively close and/or open doors to the room 10, such as the door 24. The vent actuators 242 may be configured to selectively close and/or open any vents to the room (e.g., the HVAC vent 20). The door actuators 240 and/or the vent actuators 242 may be used when activating the fire suppression system 100 or testing the room air integrity to limit airflow out of the room 10.

### Cloud Controller

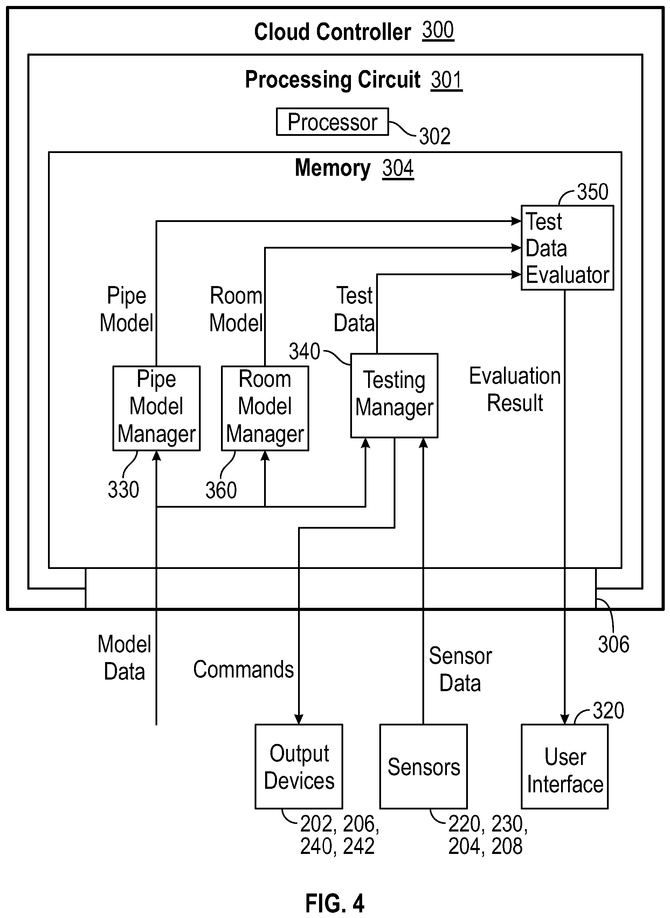

Referring to FIGS. 3 and 4, the testing system 200 includes a second controller, shown as cloud controller 300. The cloud controller 300 includes a processing circuit 301 containing a processor 302 and a memory 304. In some embodiments, the cloud controller 300 includes one or more servers. In some embodiments, the cloud controller 300 is physically located remotely from the room 10 (e.g., in a different room, in a different building, off-site, etc.). In some embodiments, the controller 150 is physically located closer to the room 10 than the cloud controller 300 (e.g., in the room 10, in the same building, in the same building complex, etc.). In some embodiments, the controller 150 acts as a local controller that transfers data (e.g., sensor data) to the cloud controller 300 and distributes commands from the cloud controller 300 to various components of the fire suppression system 100 and/or the testing system 200. In other embodiments, the functionality of the cloud controller 300 is incorporated into the controller 150, and the cloud controller 300 is omitted. Accordingly, any description herein of the cloud controller 300 may apply to the controller 150 in other embodiments.

As shown, the cloud controller 300 is operatively coupled to the controller 150 by communication interface 306 and a network 308. The communication interface 306 can be or include wired or wireless communications interfaces (e.g., jacks, antennas, transmitters, receivers, transceivers, wire terminals, etc.) for conducting data communications with the network 308 or other components of the fire suppression system 100 or the testing system 200. In various embodiments, communications through the communication interface 306 can be direct (e.g., local wired or wireless communications) or through a communications network (e.g., the network 308, which may include a WAN, the Internet, a cellular network, etc.). For example, the communication interface 306 can include an Ethernet card and port for sending and receiving data over an Ethernet-based communications link or network. In another example, the communication interface 306 can include a Wi-Fi transceiver for communicating via a wireless communications network. In another example, the communication interface 306 can include cellular or mobile phone communications transceivers. In another example, the communication interface 306 can include a power line communications interface. The controller 150 may include a similar communications interface.

The cloud controller 300 is operatively coupled to various systems of the fire suppression system 100 and the testing system 200. As shown in FIG. 3, the cloud controller 300 is operatively coupled to the compressed air supply 202, the electrical regulation valve 206, and the flow sensor 208 of the test gas assembly 201. The cloud controller 300 may control operation of the test gas assembly 201 (e.g., the output pressure and/or the output flow rate of the test gas assembly 201). The cloud controller 300 is operatively coupled to the pipe pressure sensors 220 and the room pressure sensors 230. Accordingly, the cloud controller 300 may receive pressure measurements from each of the pipe pressure sensors 220 and the room pressure sensors 230. The cloud controller 300 is operatively coupled to the door actuators 240 and the vent actuators 242. Accordingly, the cloud controller 300 may provide commands to the door actuators 240 and/or the vent actuators 242 to open and/or close one or more doors and/or vents.

The cloud controller 300 is further operatively coupled to an operator interface, user interface, input device, or output device, shown as user interface 320. In some embodiments, the user interface 320 is configured to receive information and/or commands from a user. By way of example, the user interface 320 may include keyboards, mice, touchscreens, microphones, or other input devices. In some embodiments, the user interface 320 is configured to provide information to a user. By way of example, the user interface 320 may include displays, lights, speakers, or other output devices. In some embodiments, the user interface 320 includes a laptop, smartphone, or tablet.

### Pipe Leakage Test

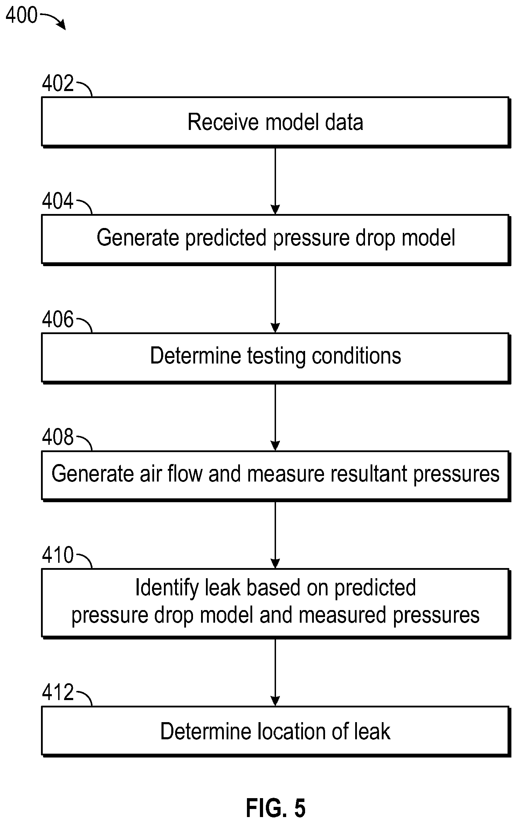

Referring to FIGS. 4 and 5, the testing system 200 is configured to perform a pipe leakage test on the pipe network 120 according to a method 400. In performing the pipe leakage test, the testing system 200 identifies whether any leaks are present in the pipe network 120. If one or more leaks are present, the testing system 200 may locate the leak (e.g., identify a general location of, identify two nodes between which the leak is likely present, etc.). The testing system 200 may perform the pipe leakage test automatically without intervention from a user. By way of example, the testing system 200 may perform the pipe leakage test regularly according to a predetermined schedule (e.g., once per month, once per year, etc.).

In step 402 of the method 400, the cloud controller 300 receives model data (e.g., pipe model data). The model data may then be stored in the memory 304. The model data identifies, quantifies, locates, or otherwise describes one or more features of the fire suppression system 100 and/or the testing system 200. The model data may include a quantity and location of the fire suppressant tanks 102, the actuators 110, the nozzles 122, the pipe sections 170, the fittings, test gas assembly 201, the test gas inlet 210, and/or the nodes of the pipe pressure sensors 220. The model data may include dimensional characteristics (e.g., a size and/or shape) of the fire suppressant tanks 102, the actuators 110, the nozzles 122, the pipe sections 170, the fittings, test gas assembly 201, the test gas inlet 210, and/or the nodes of the pipe pressure sensors 220. By way of example, the model data may include a length and internal diameter of a pipe section 170. The model data may include performance characteristics of the fire suppressant tanks 102, the actuators 110, the nozzles 122, the pipe sections 170, the fittings, test gas assembly 201, the test gas inlet 210, and/or the nodes of the pipe pressure sensors 220. By way of example, the model data may include a predetermined resistance coefficient for one of the fittings that quantifies the resistance of the fitting to fluid flow therethrough.

In some embodiments, the model data is entered manually by a user (e.g., through the user interface 320. By way of example, the cloud controller 300 may provide a graphical user interface, through which the user can select and/or identify characteristics of each of the components of the fire suppression system 100 and/or testing system 200. In other embodiments, the model data is retrieved from another device (e.g., a portable storage device, such as a flash drive, a server or personal computer or in communication with the cloud controller 300, etc.). By way of example, a model file (e.g., generated using a computer-aided design (CAD) software package) that describes the layout of the fire suppression system 100 and/or the testing system 200 is generated on a user device and uploaded to the cloud controller 300 through the network 308. Such a model file may be generated during the process of designing the fire suppression system 100.

In step 404 of the method 400, a predictive pipe model of the pipe network 120 is generated. Specifically, a module of the cloud controller 300, shown as pipe model manager 330, generates a predictive pipe model (e.g., a predicted pressure drop model) of the pipe network 120 based on the model data received in step 402. The pipe model manager 330 includes mathematical relationships (e.g., calculation algorithms) that facilitate generating a mathematical model predicting how the pipe network 120 will react to certain inputs. By way of example, the pipe model manager 330 may perform a series of calculations based on the model data and algorithms stored in the memory 304. The result of these calculations may be a predicted pressure drop model that illustrates a pressure drop profile along the pipe network 120. The pressure drop profile indicates how the pressure decreases from the gas test inlet 201 to the outlet of each nozzle 122. The pressure drop profile provided by the predicted pressure drop model may be continuous (i.e., a user may input any location along the pipe network 120, and the predicted pressure drop model may provide a predicted pressure drop at that location). The predicted pressure drop may be calculated relative to the pressure at the test gas inlet 210. The predicted pressure drop model may dependent on (e.g., a function of) one or more inputs. By way of example, the predicted pressure drop model may be a function of the type of test fluid (e.g., air, nitrogen, etc.), the flow rate of the test fluid into the pipe network 120, the pressure of the test fluid at the test gas inlet 210, or other factors.

In step 406 of the method 400, testing conditions are determined. Specifically, a module of the cloud controller 300, shown as testing manager 340, generates a testing protocol for the fire suppression system 100. The testing protocol specifies certain testing conditions that the cloud controller 300 will control the testing system 200 to meet during the test. By way of example, the testing protocol may specify a test fluid pressure and/or a test fluid flow rate to be provided by the test gas assembly 201 at the test gas inlet 210. By way of another example, the testing protocol may specify a length of the test (e.g., one minute, 10 minutes, an hour, etc.). In some embodiments, the testing protocol is based on the model data. By way of example, the testing manager 340 may vary the test fluid flow rate based on the quantity and/or performance characteristics of the nozzles 122. In some embodiments, the testing manager 340 is configured to set the test fluid flow rate to be greater than a choked flow condition for the nozzles 122. This ensures a constant mass flow rate through each nozzle 122, which ensures the accuracy of further calculations. In other embodiments, the testing conditions are predetermined independent of the model data. In some embodiments, the testing manager 340 provides multiple sets of testing conditions. By way of example, the testing protocol may specify providing a first test fluid flow rate for a first time period, then subsequently providing a second test fluid flow rate for a second time period. By collecting pressure drop data for a variety of input conditions, the test may provide a more reliable result.

In step 408 of the method 400, airflow through the pipe network 120 is generated, and the resultant pressures throughout the pipe network 120 are measured. Specifically, the testing manager 340 commands the test gas assembly 201 to provide a flow of compressed air to the pipe network 120 according to the testing protocol. The compressed air supply 202 provides a flow of compressed air at a pressure controlled by the pressure regulator 204. This pressure may be predetermined or specified by the testing protocol. The electrical regulation valve 206 controls the flow rate (e.g., according to the testing protocol). The air flows through the pipe network 120 to the nozzles 122, where the air is subsequently ejected into the enclosed volume 12 of the room 10. The pipe network 120 resists the air flow, decreasing the pressure of the air as the pipe network 120 extends away from the test gas inlet 210. Each pipe pressure sensor 220 measures the air pressure at a corresponding node along the length of the pipe network 120. The pipe pressure sensors 220 provide this measured pressure data to the testing manager 340, which stores the measured pressure data. This process may be repeated for different input conditions (e.g., air flow rates) as specified by the testing protocol.

In step 410 of the method 400, one or more leaks are identified based on the predicted pressure drop model and the measured pressures. Specifically, a module of the cloud controller 300, shown as test data evaluator 350, receives the test data acquired during step 408. The test data may include the testing protocols, the pressures measured by the pipe pressure sensors 220, and/or other data. The test data evaluator 350 also receives the predicted pressure drop model generated during step 404. The test data evaluator 350 identifies the locations of the pipe pressure sensors 220 along the pipe network 120. These locations may be provided as part of the model data. The test data evaluator 350 inputs the locations of the pipe pressure sensors 220 into the predicted pressure drop model to determine a predicted pressure at each node corresponding to the pipe pressure sensors 220. The test data evaluator 350 compares the predicted pressure at each node with the measured pressure at each node. If the measured pressure for one or more of the nodes is substantially lower than (e.g., outside of a predetermined acceptable tolerance range) the corresponding predicted pressure, the test data evaluator 350 determines that a leak is present. If each of the measured pressures are near (e.g., within a predetermined acceptable tolerance range) the corresponding predicted pressures, the test data evaluator 350 determines that a leak is not present. If one or more of the measured pressures are substantially higher than the corresponding predicted pressures, the test data evaluator 350 may determine that an error occurred during the test. The test data evaluator 350 may then communicate the evaluation result (e.g., a leak is present, no leak is present, an error occurred during testing) to a user. By way of example, the test data evaluator 350 may provide a notification on the user interface 320.

**In** step 412 of the method 400, the location of the leak is determined. Specifically, in response to a determination that a leak has been identified, the test data evaluator 350 is configured to determine (e.g., estimate) the location of the leak. By way of example, the test data evaluator 350 may identify the closest measured node (i.e., a node where the pressure is measured by a room pressure sensor 220) to the test gas inlet 210 where the measured pressure is substantially less than the predicted pressure at the node. The test data evaluator 350 may determine that the leak is located between the identified node an adjacent node. By way of example, the test data evaluator 350 may determine that the leak is located between the identified node and the adjacent node that is closer to the test gas inlet 210. The test data evaluator 350 may provide a notification to a user (e.g., through the user interface 320) identifying the location of the leak. In other embodiments, step 412 is omitted from the method.

### Room Air Integrity Test

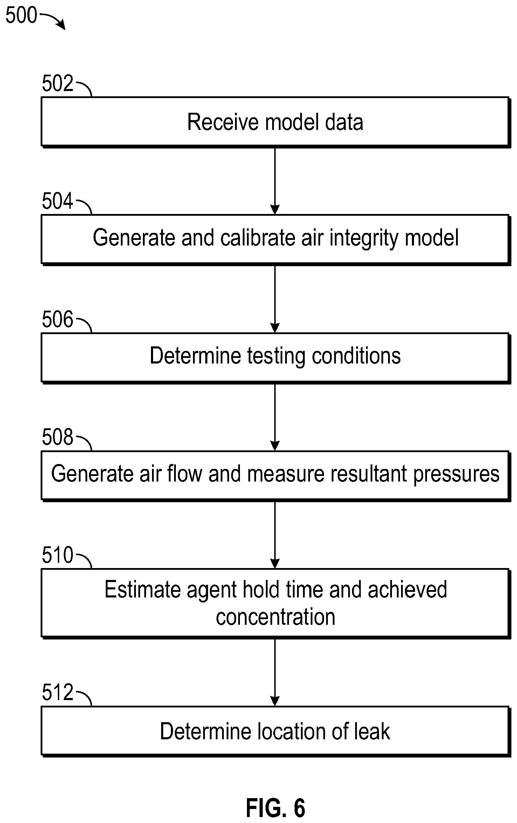

Referring to FIGS. 4 and 6, the testing system 200 is configured to perform a room air integrity test on the room 10 according to a method 500. In order to ensure that the fire suppression system 100 is effective in addressing fires, it is desirable to maintain greater than a threshold concentration of agent within the enclosed volume 12 for at least a threshold period of time. However, the fire suppressant tanks 102 contain a finite amount of fire suppressant agent. Accordingly, if the agent leaks out of the room too quickly, the concentration of the agent may never reach the required concentration or may not maintain the required concentration for the required period of time. The room air integrity test quantifies the leakage of the room 10 to confirm that the fire suppression system 100 is able to perform as required.

During the room air integrity test, the test gas assembly 201 provides compressed air to the room 10 through the pipe network 120 at various flow rates. The room pressure sensors 230 monitor the pressure at various locations throughout the room 10. Utilizing a mathematical model and this measured pressure data, the testing system 200 quantifies the air integrity of the room 10. Specifically, the testing system 200 may estimate an agent hold time (e.g., a measure of how long the agent is retained within the room, such as the amount of time that greater than a threshold concentration of agent is retained) and an achieved concentration (e.g., a measure of the concentration of the agent within the room 10, such as the peak concentration reached) that can be achieved by the fire suppression system 100 within the room 10. Accordingly, by estimating the agent hold time and the achieved concentration of the fire suppression system 100, the testing system 200 is able to confirm that the amount of agent within the fire suppressant tanks 102 is sufficient to overcome the leakage of agent from the room 10.

In other systems, a room air integrity test is performed by installing a blower door into the doorways of a room. The blower doors include fans that remove air from the room, and the resultant change in air pressure of the room is monitored to determine the air integrity of the room. Installing these blower doors and performing the room air integrity test in this way requires the presence of a technical expert and shutting down of mechanical ventilation devices, which can be costly. Additionally, such a test can cause business disruption (e.g., by preventing access to the room where the test is performed). Certain governing bodies require the room integrity test to be performed periodically (e.g., once per year), meaning these costs are experienced repeatedly. In contrast, the testing system 200 may perform the room air integrity test automatically and without intervention from a user. Because the test gas assembly 201 is used to provide compressed air to the room 10 instead of relying on a blower door, the testing system 200 does not require the installation of additional equipment to perform the test, and the testing can be performed with minimal disruption to the business. By way of example, the testing system 200 may perform the room air integrity test regularly according to a predetermined schedule (e.g., once per month, once per year, etc.). The test may be scheduled for a time when access to the room 10 is not necessary (e.g., at night) to further minimize the business disruption.

In step 502 of the method 500, the cloud controller 300 receives model data (e.g., room model data). The model data may then be stored in the memory 304. The model data identifies, quantifies, locates, or otherwise describes one or more features of the fire suppression system 100, the testing system 200, and/or the room 10. The model data may include a quantity and location of the fire suppressant tanks 102, the nozzles 122, the room pressure sensors 230, HVAC vents 20, leakage apertures 22, doors 24, and/or other features of the room 10 (e.g., the walls). The model data may include dimensional characteristics (e.g., a size and/or shape) of the fire suppressant tanks 102, the nozzles 122, the room pressure sensors 230, HVAC vents 20, leakage apertures 22, doors 24, and/or other features of the room 10 (e.g., the walls). By way of example, the model data may include the location of each nozzle 122 and each room pressure sensor 230 relative to the walls of the room 10. The model data may include performance characteristics of the fire suppressant tanks 102, the nozzles 122, the room pressure sensors 230, HVAC vents 20, leakage apertures 22, doors 24, and/or other features of the room 10. By way of example, the model data may include a volume of agent contained in the fire suppressant tanks 102. By way of example, the model data may include a rate at which agent is distributed by the nozzles 122 when the fire suppression system 100 is activated.

In some embodiments, the model data includes the results of a blower door fan test (e.g., a blower door test data) of the air integrity of the room 10. Such a test may be performed before the initial commissioning of the fire suppression system 100 (e.g., immediately after installation of the fire suppression system 100). By way of example, a blower door may be installed in the door 24 and used to evacuate air from the room 10 at various different flow rates. The resultant air pressure within the room 10 may be measured (e.g., by the room pressure sensors 230, by another pressure sensor that is used solely for the blower door fan test, etc.). Accordingly, the blower door test data may indicate the performance (e.g., a performance characteristic) of the room 10 during the blower door fan test (e.g., the resultant air pressure at a given air flow rate through the blower fan door). Because the blower door fan test may be performed manually (e.g., without the use of cloud controller 300), the blower door test data may be manually recorded.

In some embodiments, the model data is entered manually by a user (e.g., through the user interface 320. By way of example, the cloud controller 300 may provide a graphical user interface, through which the user can select and/or identify characteristics of each of the components of the fire suppression system 100, testing system 200, and/or the room 10. In other embodiments, the model data is retrieved from another device (e.g., a portable storage device, such as a flash drive, a server or personal computer or in communication with the cloud controller 300, etc.). By way of example, a model file (e.g., generated using a computer-aided design (CAD) software package) that describes the layout of the fire suppression system 100, the testing system 200, and/or the room 10 is generated on a user device and uploaded to the cloud controller 300 through the network 308. Such a model file may be generated during the process of designing the fire suppression system 100 or the building containing the room 10.

In step 504 of the method 500, a predictive room model of the room 10 is generated. Specifically, a module of the cloud controller 300, shown as room model manager 360, generates a predictive room model (e.g., an air integrity model) of the room 10 based on the model data received in step 502. The room model manager 360 includes mathematical relationships (e.g., calculation algorithms) that facilitate generating a mathematical model relating the agent hold time and the achieved concentration to the air pressure within the room at different air flow rates. By way of example, the room model manager 360 may perform a series of calculations based on the model data and algorithms stored in the memory 304. The result of these calculations may be an air integrity model that accepts measured air pressures (e.g., as measured by the room pressure sensors 230) and the corresponding air flow rates (e.g., of the air provided by the test gas assembly 201) as inputs and provides an estimated agent hold time and an estimated achieved concentration as outputs. The room model manager 360 may calibrate the air integrity model based on the test results of a blower door fan test.

In step 506 of the method 500, testing conditions are determined. Specifically, the testing manager 340 generates a testing protocol for the fire suppression system 100. The testing protocol specifies certain testing conditions that the cloud controller 300 will control the testing system 200 to meet during the air integrity test. By way of example, the testing protocol may specify a test fluid flow rate to be provided by the test gas assembly 201 at the test gas inlet 210. By way of another example, the testing protocol may specify a length of the test (e.g., one minute, 10 minutes, an hour, etc.). In some embodiments, the testing protocol is based on the model data. By way of example, the testing manager 340 may vary the test fluid flow rate based on the size of the room 10. In other embodiments, the testing conditions are predetermined independent of the model data. In some embodiments, the testing manager 340 provides multiple sets of testing conditions. According to an exemplary embodiment, the testing manager 340 may specify at least three different test fluid flow rates (e.g., a first flow rate, a second flow rate, and a third flow rate resulting in a first pressure, a second pressure, and a third pressure in the room 10, respectively).

In some embodiments, the testing protocol specifies that any doors and/or vents to the room 10 are closed during the testing. By way of example, the testing protocol may require that the door actuators 240 and the vent actuators 242 are activated to close any doors and/or vents. The testing protocol may specify that the door actuators 240 and/or the vent actuators utilize the same open and/or closed state that would be provided during activation of the fire suppression system 100.

In step 508 of the method 500, airflow through the pipe network 120 is generated, and the resultant pressures throughout the room 10 are measured. Specifically, the testing manager 340 commands the test gas assembly 201 to provide a flow of compressed air to the pipe network 120 according to the testing protocol. The compressed air supply 202 provides a flow of compressed air at a pressure controlled by the pressure regulator 204. This pressure may be predetermined or specified by the testing protocol. The electrical regulation valve 206 controls the flow rate (e.g., according to the testing protocol). The air flows through the pipe network 120 to the nozzles 122, where the air is subsequently ejected into the enclosed volume 12 of the room 10. As air exits the nozzles 122, the pressure within the room 10 builds. The pressure in areas near the nozzles 122 may be relatively high, whereas the pressure in areas near leaks may be relatively low. Each room pressure sensor 230 measures the air pressure at a corresponding location within the enclosed volume 12 of the room 10. The room pressure sensors 230 provide this measured pressure data to the testing manager 340, which stores the measured pressure data. This process may be repeated for different input conditions (e.g., air flow rates) as specified by the testing protocol.

In step 510 of the method 500, the agent hold time and the achieved concentration are estimated. Specifically, the test data evaluator 350 the test data acquired during step 508. The test data may include the testing protocols, the pressures measured by the room pressure sensors 230, and/or other data. The test data evaluator 350 also receives the air integrity model generated during step 504. The test data evaluator 350 inputs the air flow rates and the corresponding measured pressures into the air integrity model, and the air integrity model provides an estimated agent hold time and an estimated achieved concentration. The test data evaluator 350 may then compare the estimated agent hold time and/or the estimated achieved concentration to one or more requirements (e.g., building codes and/or fire protection standards, etc.). The test data evaluator 350 may then communicate the evaluation results to a user. The evaluation results may include the estimated agent hold time, the estimated achieved concentration, and/or an indication of whether the room 10 and the fire suppression system 100 meet the requirements. By way of example, the test data evaluator 350 may provide a notification on the user interface 320.

In step 512 of the method 500, the location of the leak is determined. Specifically, the test data evaluator 350 may estimate an area of the room 10 where the greatest amount of leakage occurs. By way of example, the test data evaluator 350 may compare the pressures measured by each of the room pressure sensors 230. The test data evaluator 350 may identify one or more room pressure sensors 230 consistently experienced the lowest pressures, which may be an indication that a relatively large leak of air from the room 10 is present nearby. The test data evaluator 350 may determine that an area near the one or more identified room pressure sensors 230 contains a relatively large amount of leakage compared to other areas of the room 10. The test data evaluator 350 may provide a notification to a user identifying this area. In other embodiments, step 512 is omitted from the method.

### Configuration of Exemplary Embodiments

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the room 10, the fire suppression system 100, and the test system 200 as shown in the various exemplary embodiments is illustrative only.

## Claims

1. A fire suppression system, comprising:
a container (102) containing a fire suppressant agent;
a pipe network (120) fluidly coupling the container to a plurality of nozzles (122);
a pressure sensor (230) positioned to measure a pressure within a room (10) containing the nozzles (122);
a test fluid supply (202) fluidly coupled to the pipe network (120) and configured to supply a test fluid to the room through the nozzles; and
a controller (300) operatively coupled to the test fluid supply (202) and the pressure sensor (230) and configured to:
control the test fluid supply (202) to supply the test fluid to the room at the first flow rate;
control the pressure sensor (230) to measure a first pressure within the room while the test fluid is supplied to the room at the first flow rate; and
estimate an agent hold time and an achieved concentration that can be provided by the fire suppression system within the room based on the first flow rate and the first pressure.

2. The fire suppression system of claim 1, wherein the controller is configured to:
control the test fluid supply to supply the test fluid to the room at a second flow rate;
control the pressure sensor to measure a second pressure within the room while the test fluid is supplied to the room at the second flow rate; and
estimate the agent hold time and the achieved concentration that can be provided by the fire suppression system within the room based on the first flow rate, the first pressure, the second flow rate, and the second pressure.

3. The fire suppression system of claim 2, wherein the controller is configured to:
control the test fluid supply to supply the test fluid to the room at a third flow rate;
control the pressure sensor to measure a third pressure within the room while the test fluid is supplied to the room at the third flow rate; and
estimate the agent hold time and the achieved concentration that can be provided by the fire suppression system within the room based on the first flow rate, the first pressure, the second flow rate, the second pressure, the third flow rate, and the third pressure.

4. The fire suppression system of claim 2, wherein the test fluid is compressed air, and wherein the test fluid supply includes a tank of the compressed air configured to provide the compressed air.

5. The fire suppression system of claim 1, wherein the pressure sensor is a first pressure sensor positioned to measure the pressure at a first location within the room, further comprising a second pressure sensor positioned to measure a pressure at a second location within the room, and wherein the controller is configured to:
control the first pressure sensor to measure the first pressure at the first location while the test fluid is supplied to the room at the first flow rate;
control the second pressure sensor to measure a second pressure at the second location while the test fluid is supplied to the room at the first flow rate; and
estimate an agent hold time and an achieved concentration that can be provided by the fire suppression system within the room based on the first flow rate, the first pressure, and the second pressure.

6. The fire suppression system of claim 5, wherein the controller is configured to estimate a location of a leak of the test fluid from the room based on the first pressure and the second pressure.

7. The fire suppression system of claim 1, wherein the controller is configured to:
receive test data describing a performance characteristic of the room during a blower door fan test; and
estimate the agent hold time and the achieved concentration that can be provided by the fire suppression system within the room based on the first flow rate, the first pressure, and the test data.

8. The fire suppression system of claim 1, wherein the controller is configured to:
receive model data describing at least one of the room, the pipe network, the test fluid supply, the nozzles, the pressure sensor, or the container; and
estimate the agent hold time and the achieved concentration that can be provided by the fire suppression system within the room based on the first flow rate, the first pressure, and the model data.

9. The fire suppression system of claim 1, further comprising an actuator (110) configured to selectively fluidly couple the container to the pipe network.

10. The fire suppression system of claim 1, wherein the fire suppressant agent and the test fluid are different materials.

## Patentansprüche

1. Feuerunterdrückungssystem, umfassend:
einen Behälter (102), der ein Feuerunterdrückungsmittel enthält;
ein Rohrnetzwerk (120), das den Behälter fluidisch mit einer Vielzahl von Düsen (122) koppelt;
einen Drucksensor (230), der positioniert ist, um einen Druck in einem Raum (10) zu messen, der die Düsen (122) enthält;
eine Testfluidversorgung (202), die mit dem Rohrnetzwerk (120) gekoppelt und konfiguriert ist, um dem Raum ein Testfluid durch die Düsen zuzuführen; und
eine Steuerung (300), die operativ mit der Testfluidversorgung (202) gekoppelt ist, und den Drucksensor (230) und konfiguriert zum:
Steuern der Testfluidversorgung (202), um dem Raum das Testfluid mit der ersten Durchflussrate zuzuführen;
Steuern des Drucksensors (230), um einen ersten Druck innerhalb des Raums zu messen, während das Testfluid dem Raum mit der ersten Durchflussrate zugeführt wird; und
Schätzen einer Mittelhaltezeit und einer erreichten Konzentration, die von dem Feuerunterdrückungssystem in dem Raum bereitgestellt werden kann, basierend auf der ersten Durchflussrate und dem ersten Druck.

2. Feuerunterdrückungssystem nach Anspruch 1, wobei die Steuerung konfiguriert ist zum:
Steuern der Testfluidversorgung, um dem Raum das Testfluid mit einer zweiten Durchflussrate zuzuführen;
Steuern des Drucksensors, um einen zweiten Druck innerhalb des Raums zu messen, während das Testfluid dem Raum mit der zweiten Durchflussrate zugeführt wird; und
Schätzen der Mittelhaltezeit und der erreichten Konzentration, die von dem Feuerunterdrückungssystem in dem Raum bereitgestellt werden können, basierend auf der ersten Durchflussrate, dem ersten Druck, der zweiten Durchflussrate und dem zweiten Druck.

3. Feuerunterdrückungssystem nach Anspruch 2, wobei die Steuerung konfiguriert ist zum:
Steuern der Testfluidversorgung, um das Testfluid mit einer dritten Durchflussrate in den Raum zuzuführen;
Steuern des Drucksensors, um einen dritten Druck innerhalb des Raums zu messen, während das Testfluid mit der dritten Durchflussrate in den Raum zugeführt wird; und
Schätzen der Mittelhaltezeit und der erreichten Konzentration, die von dem Feuerunterdrückungssystem in dem Raum bereitgestellt werden können, basierend auf der ersten Durchflussrate, dem ersten Druck, der zweiten Durchflussrate, dem zweiten Druck, der dritten Durchflussrate und dem dritten Druck.

4. Feuerunterdrückungssystem nach Anspruch 2, wobei es sich bei dem Testfluid um Druckluft handelt, und wobei die Testfluidversorgung einen Drucklufttank einschließt, der konfiguriert ist, um die Druckluft bereitzustellen.

5. Feuerunterdrückungssystem nach Anspruch 1, wobei der Drucksensor ein erster Drucksensor ist, der positioniert ist, um den Druck an einer ersten Position innerhalb des Raums zu messen, ferner einen zweiten Drucksensor umfasst, der positioniert ist, um einen Druck an einer zweiten Position innerhalb des Raums zu messen, und wobei die Steuerung konfiguriert ist zum:
Steuern des ersten Drucksensors, um den ersten Druck an der ersten Stelle zu messen, während das Testfluid dem Raum mit der ersten Durchflussrate zugeführt wird;
Steuern des zweiten Drucksensors, um einen zweiten Druck an der zweiten Stelle zu messen, während das Testfluid dem Raum mit der ersten Durchflussrate zugeführt wird; und
Schätzen der Mittelhaltezeit und der erreichten Konzentration, die das Feuerunterdrückungssystem in dem Raum bereitstellen kann, basierend auf der ersten Durchflussrate, dem ersten Druck und dem zweiten Druck.

6. Feuerunterdrückungssystem nach Anspruch 5, wobei die Steuerung konfiguriert ist, um basierend auf dem ersten Druck und dem zweiten Druck eine Leckstelle des Fluids aus dem Raum zu schätzen.

7. Feuerunterdrückungssystem nach Anspruch 1, wobei die Steuerung konfiguriert ist zum:
Empfangen von Testdaten, die eine Leistungseigenschaft des Raums während eines Blower-Door-Lüfter-Tests beschreiben; und
Schätzen der Mittelhaltezeit und der erreichten Konzentration, die von dem Feuerunterdrückungssystem in dem Raum bereitgestellt werden können, basierend auf der ersten Durchflussrate, dem ersten Druck und den Testdaten.

8. Feuerunterdrückungssystem nach Anspruch 1, wobei die Steuerung konfiguriert ist zum:
Empfangen von Modelldaten, die mindestens den Raum, das Rohrnetzwerk, die Testfluidversorgung, die Düsen, den Drucksensor oder den Behälter beschreiben; und
Schätzen der Mittelhaltezeit und der erreichten Konzentration, die von dem Feuerunterdrückungssystem in dem Raum bereitgestellt werden können, basierend auf der ersten Durchflussrate, dem ersten Druck und den Modelldaten.

9. Feuerunterdrückungssystem nach Anspruch 1, ferner umfassend einen Aktuator (110), der konfiguriert ist, um den Behälter selektiv fluidisch mit dem Rohrnetzwerk zu koppeln.

10. Feuerunterdrückungssystem nach Anspruch 1, wobei das Feuerunterdrückungsmittel und das Testfluid unterschiedliche Materialien sind.

## Revendications

1. Système d'extinction d'incendie, comprenant :
un conteneur (102) contenant un agent extincteur ;
un réseau de tuyauterie (120) reliant fluidiquement le conteneur à une pluralité de buses (122) ;
un capteur de pression (230) disposé pour mesurer une pression au sein d'une pièce (10) contenant les buses (122) ;
une alimentation en fluide d'essai (202) couplée fluidiquement au réseau de tuyauterie (120) et configurée pour alimenter la pièce en fluide d'essai par l'intermédiaire des buses ; et
un dispositif de commande, (300) couplé fonctionnellement à l'alimentation en fluide d'essai (202),et le capteur de pression (230) et configuré pour :
commander l'alimentation en fluide d'essai (202) pour alimenter la pièce en fluide d'essai au premier débit ;
commander le capteur de pression (230) pour mesurer une première pression dans la pièce pendant l'alimentation de la pièce en fluide d'essai au premier débit ; et
estimer un temps de maintien de l'agent et une concentration obtenue pouvant être fournis par le système d'extinction d'incendie dans la pièce sur la base du premier débit et de la première pression.

2. Système d'extinction d'incendie selon la revendication 1, dans lequel le dispositif de commande est configuré pour :
commander l'alimentation en fluide d'essai pour alimenter la pièce en fluide d'essai au deuxième débit ;
commander le capteur de pression pour mesurer une deuxième pression dans la pièce pendant l'alimentation de la pièce en fluide d'essai au deuxième débit ; et
estimer le temps de maintien de l'agent et la concentration obtenue pouvant être fournis par le système d'extinction d'incendie dans la pièce sur la base du premier débit, de la première pression, du deuxième débit et de la deuxième pression.

3. Système d'extinction d'incendie selon la revendication 2, dans lequel le dispositif de commande est configuré pour :
commander l'alimentation en fluide d'essai pour alimenter la pièce en fluide d'essai à un troisième débit ;
commander le capteur de pression pour mesurer une troisième pression dans la pièce pendant l'alimentation de la pièce en fluide d'essai au troisième débit ; et
estimer le temps de maintien de l'agent et la concentration obtenue pouvant être fournis par le système d'extinction d'incendie dans la pièce sur la base du premier débit, de la première pression, du deuxième débit, de la deuxième pression, du troisième débit et de la troisième pression.

4. Système d'extinction d'incendie selon la revendication 2, dans lequel le fluide d'essai est de l'air comprimé, et dans lequel l'alimentation en fluide d'essai comprend un réservoir d'air comprimé configuré pour fournir l'air comprimé.

5. Système d'extinction d'incendie selon la revendication 1, dans lequel le capteur de pression est un premier capteur de pression disposé pour mesurer la pression au niveau d'un premier emplacement dans la pièce, comprenant également un second capteur de pression disposé pour mesurer une pression au niveau d'un second emplacement dans la pièce, et dans lequel le dispositif de commande est configuré pour :
commander le premier capteur de pression pour mesurer la première pression au niveau du premier emplacement pendant l'alimentation de la pièce en fluide d'essai au premier débit ;
commander le capteur de pression pour mesurer une deuxième pression au niveau du second emplacement pendant l'alimentation de la pièce en fluide d'essai au premier débit ; et
estimer un temps de maintien de l'agent et une concentration obtenue pouvant être fournis par le système d'extinction d'incendie dans la pièce sur la base du premier débit, de la première pression, et de la deuxième pression.

6. Système d'extinction d'incendie selon la revendication 5, dans lequel le dispositif de commande est configuré pour estimer un emplacement d'une fuite du fluide d'essai de la pièce sur la base de la première pression et de la deuxième pression.

7. Système d'extinction d'incendie selon la revendication 1, dans lequel le dispositif de commande est configuré pour :
recevoir des données d'essai décrivant une caractéristique de réalisation de la pièce lors d'un essai par ventilateur de porte d'insufflation ; et
estimer le temps de maintien de l'agent et la concentration obtenue pouvant être fournis par le système d'extinction d'incendie dans la pièce sur la base du premier débit, de la première pression, et des données d'essai.

8. Système d'extinction d'incendie selon la revendication 1, dans lequel le dispositif de commande est configuré pour :
recevoir des données de modèle décrivant au moins l'un de la pièce, du réseau de tuyauterie, de l'alimentation en fluide d'essai, des buses, du capteur de pression ou du conteneur ; et
estimer le temps de maintien de l'agent et la concentration obtenue pouvant être fournis par le système d'extinction d'incendie dans la pièce sur la base du premier débit, de la première pression, et des données de modèle.

9. Système d'extinction d'incendie selon la revendication 1, comprenant également un actionneur (110) configuré pour coupler sélectivement et fluidiquement le conteneur au réseau de tuyauterie.

10. Système d'extinction d'incendie selon la revendication 1, dans lequel l'agent extincteur et le fluide d'essai sont des matériaux différents.
